# EUROPÄISCHE PATENTSCHRIFT

(11) **EP 2 915 289 B1**
(45) Veröffentlichungstag und Bekanntmachung des Hinweises auf die Patenterteilung: **20.05.2020**
(21) Anmeldenummer: 13766068.4
(22) Anmeldetag: 23.09.2013
(51) Int. Cl.: H04L 12/46, G06F 13/42, H04L 12/40

(54) **REPEATER, CAN-KOMMUNIKATIONSSYSTEM UND VERFAHREN ZUR ÜBERTRAGUNG EINES DATENTELEGRAMMS INNERHALB EINES CAN-KOMMUNIKATIONSSYSTEMS**
REPEATER, CAN COMMUNICATION SYSTEM, AND METHOD FOR TRANSMITTING A DATA TELEGRAM WITHIN A CAN COMMUNICATION SYSTEM
RÉPÉTEUR, SYSTÈME DE COMMUNICATION CAN ET PROCÉDÉ DE TRANSMISSION D'UN TÉLÉGRAMME DE DONNÉES AU SEIN D'UN RÉSEAU DE COMMUNICATION CAN

(30) Priorität: 31.10.2012 DE 102012219940
(43) Veröffentlichungstag der Anmeldung: 09.09.2015
(73) Patentinhaber: Trumpf Werkzeugmaschinen GmbH + Co. KG, 71254 Ditzingen (DE)
(72) Erfinder: BORRELLI, Daniele, 71154 Nufringen (DE); MILICH, Andreas, 71282 Hemmingen (DE)
(74) Vertreter: Kohler Schmid Möbus Patentanwälte
(86) Internationale Anmeldenummer: PCT/EP2013/069716
(87) Internationale Veröffentlichungsnummer: WO 2014/067713

(56) Entgegenhaltungen:
- US-A1- 2007 283 181
- US-A1- 2008 274 689
- US-B1- 6 654 355
- Heikki Saha ET AL: "Comparison of system level networking solutions with high-speed CAN networks", , 15. Mai 2003 (2003-05-15), Seiten 1-8, XP055095966, Gefunden im Internet: URL:http://www.can-cia.org/fileadmin/cia/f iles/icc/9/saha.pdf [gefunden am 2014-01-13]

## Beschreibung

Die Erfindung betrifft einen Repeater für ein Kommunikationssystem mit mindestens einem Netzwerk zur Weiterleitung und insbesondere zur Verstärkung von Bits umfassenden Datentelegrammen zwischen einem ersten Teilnehmer und einem zweiten Teilnehmer, entweder innerhalb des Netzwerks oder zur Verbindung zweier gleichartiger Netzwerke, wobei der Repeater dazu eingerichtet ist, Datentelegramme auf Bit-übertragungsebene des ISO-OSI-Referenzmodells weiterzuleiten, d.h. erhaltene Bits unabhängig vom vollständigen Erhalt des Datentelegramms weiterzuleiten, wobei der Repeater mindestens zwei Transceiver zur physikalischen Ankopplung des Repeaters an das mindestens eine Netzwerk umfasst. Unter "gleichartige Netzwerke" sind Netzwerke zu verstehen, die dazu eingerichtet sind, das gleiche Protokoll bei gleicher Übertragungsrate zur Kommunikation zu verwenden.

Die Erfindung betrifft auch ein CAN-Kommunikationssystem mit mindestens einem CAN-Netzwerk, wobei das CAN-Kommunikationssystem einen ersten Teilnehmer über Datenleitungen mit einem zweiten Teilnehmer verbindet, wobei die Teilnehmer zum Senden und Empfangen von CAN-Datentelegrammen eingerichtet sind, sowie ein Verfahren zur Übertragung eines Datentelegramms von einem ersten Teilnehmer an einen zweiten Teilnehmer innerhalb eines solchen CAN-Kommunikationssystems.

Bus-Repeater sind Signalverstärker oder -aufbereiter, die ein Netzwerk in physische Segmente (Teilnetze) aufteilen, wobei der logische Netzwerkverbund erhalten bleibt. Die einzelnen Segmente sind jeweils physikalisch abgeschlossen wodurch auch längere Stichleitungen möglich sind. Bei geringen Datenraten können Repeater zur Vergrößerung der Reichweite eines Signals innerhalb eines Netzwerkes eingesetzt werden, um größere Übertragungsentfernungen zu realisieren. Bei größeren Datenraten wirkt sich jedoch die endliche Durchleitungsverzögerung durch den Repeater negativ auf die maximal erreichbare Übertragungsentfernung aus. Bus-Repeater nach dem Stand der Technik arbeiten vollkommen transparent, d.h. sie empfangen, verstärken und versenden Bussignale unverändert. Im Gegensatz zu Geräten auf höherer OSI-Ebene (Bridges, Gateways etc.) verarbeiten Repeater die Datenübertragung auf Bitebene und müssen nicht zunächst Daten aus dem Protokoll extrahieren, um z.B. den Empfänger zu erkennen bzw. die Daten von einem Netzwerkformat auf ein zweites anzupassen.

Bei einem CAN-Netzwerk handelt es sich um einen linearen oder sternförmigen zweidrahtigen differentiellen Datenbus, der mehrere gleichberechtigte Teilnehmer gemäß ISO11898 verbindet. Beim Übertragen von Informationen auf einem CAN-Bus versendet der Sender zu einem festgelegten Punkt innerhalb des Protokolls ein rezessives Bit und erwartet, dass noch während des Sendens des rezessiven Bits der Empfänger ein dominantes Bit als Bestätigungssignal (ACK-Bit, Acknowledge bit) zurückschickt. Ansonsten wird die Übertragung nicht erfolgreich fortgesetzt. Bei hoher Informationsdichte (z.B. 1 MBit/s) bedeutet das, dass ein Kabel nur etwa 30 - 40 m lang sein kann, da sonst die Signallaufzeit für die Datenübertragung und für das ACK-Bit zu lange ist und das ACK-Bit nicht mehr rechtzeitig ankommt, um den erfolgreichen Erhalt zu quittieren. Für ein CAN-Kommunikationssystem ist die Signallaufzeit auf dem Übertragungskanal ein wichtiger Faktor für dessen maximal mögliche Ausdehnung. Vergrößert sich die Signallaufzeit auf Werte oberhalb definierter Grenzen, beispielsweise durch Vergrößerung der Kabellänge oder durch Einbringung verzögerungsbehafteter Elemente, ist bisher zwingend eine Verringerung der Datenübertragungsrate notwendig, da sonst keine verlässliche Kommunikation mehr möglich ist. Zudem ist bisher jeder Einsatz eines CAN-Repeaters aufgrund seiner zusätzlichen Durchlaufzeit mit einer Verkürzung der maximal möglichen Kabellänge bzw. Verringerung der Datenrate verbunden.

Ein Repeater nach dem Stand der Technik verstärkt das Bussignal, kann aber das Laufzeitproblem nicht lösen. Im Gegenteil: ein Repeater führt zu einer zusätzlichen Verzögerung und damit bei hohen Datenraten zu einer weiteren Verringerung der maximalen physikalischen Ausdehnung des CAN-Netzwerks. Beim Übertragen der Daten via Bus-Gateways oder -Bridges kommt es typischerweise zu Verzögerungen von ~200 µs bis in den Millisekundenbereich. Diese hängen zudem von der Datenmenge ab, die über den Bus fließt, so dass die Zeitdauer nicht mehr deterministisch ist.

Aus US 6,654,355 B1 ist eine CAN-Bridge bekannt, also ein Koppelelement, das zwischen zwei CAN-Bussen agiert. Dabei wird in einem CAN-Bus die Information in einem Protokoll eingebettet übertragen und so von der Bridge empfangen. Die CAN-Bridge liest die Bussignale ein, extrahiert aus diesen die eingebettete Information und versendet eine Empfangsbestätigung. Anschließend wird die Information in das Protokoll des anderen Netzwerkes eingebettet und versendet. Die CAN-Bridge erhält von einem der Teilnehmer bei korrektem Empfang dieser Information eine Empfangsbestätigung. Eine solche CAN-Bridge, die zwei CAN-Busse koppeln kann, ist bspw. das "AnaGate CAN duo" der Analytica GmbH. Die Zeitdauer für die Übermittlung einer Nachricht von einem CAN-Bus zum anderen ist stark abhängig von Telegrammlänge und Dateninhalt (Bitstuffing-Regel) und ist daher sehr lang (je nach CAN-Controllern und Mikrokontroller ~200µs) und undeterministisch (abhängig von Telegrammlänge, Daten (Bitstuffing), Prozessorauslastung).

Aus der US 2007/283181 A1 ist ein Kommunikationssystem mit mehreren Bussen bekannt, die miteinander über eine Reihenanordnung einer Brücke, eines ersten Kommunikationscontrollers, eines zweiten Kommunikationscontrollers und einer Brücke kommunizieren. Zwischen den Kommunikationscontrollern besteht ein Kommunkationspfad, über den eine Datenübertragung ermöglicht wird.

Aufgabe der Erfindung ist es, einen CAN-Repeater, der größere Übertragungswege innerhalb eines Kommunikationssystems erlaubt und flexibel innerhalb eines Kommunikationssystems einsetzbar ist, sowie ein CAN-Kommunikationssystem und ein Verfahren zur Übertragung eines Datentelegramms innerhalb eines solchen CAN-Kommunikationssystems vorzuschlagen.

Diese Aufgabe wird erfindungsgemäß durch einen Repeater gemäß Anspruch 1, ein CAN-Kommunikationssystem gemäß Anspruch 5 und ein Verfahren gemäß Anspruch 11 gelöst.

Erfindungsgemäß umfasst der CAN-Repeater eine Logikeinheit, die dazu eingerichtet ist, den festgelegten Aufbau eines vom ersten Teilnehmer an den zweiten Teilnehmer weiterzuleitenden Datentelegramms zu erkennen, zu einem festgelegten Zeitpunkt vor oder während des Empfangs der Bits des Datentelegramms ein ACK-Bit zu emulieren und an den ersten Teilnehmer weiterzuleiten.

Der erfindungsgemäße CAN-Repeater ist also nur teilweise "transparent" und dient nicht nur zum Weiterleiten und ggfs. Verstärken der Signale, sondern auch zum gezielten Manipulieren von Datentelegrammen, die vorzugsweise entsprechend dem CAN-Busprotokoll oder dem I²C -Protokoll aufgebaut sind.

Ein ACK-Signal (ACK-Bit) ist ein Signal, das bei einer Datenübertragung verwendet wird, um den Erhalt oder die Verarbeitung von Daten oder Befehlen zu bestätigen. Das vom Repeater emulierte ACK-Bit ersetzt das rezessives Bit im ACK-Slot des Datentelegramms durch ein dominantes Bit. Wenn das Signal bspw. auf einem CAN-Bus verzögert wird, bspw. durch einen kapazitiven Drehübertrager oder ein langes Kabel, können gewöhnlich nur noch geringe Informationsdichten erfolgreich übertragen werden, da dann mehr Zeit pro Bit auf dem Bus zur Verfügung stehen muss und somit auch mehr Zeit, um das dominante ACK-Bit des Empfängers an den Sender zu übermitteln. Mit dem erfindungsgemäßen Repeater ist es möglich, eine Empfangsbestätigung (ACK-Bit) zu generieren, das bereits vor oder während des Empfangens des Telegramms durch den Repeater an den Sender zurückgesandt wird, so dass die Datenübertragung fortgesetzt werden kann, ohne auf die vom eigentlichen Empfänger versandte "reale" Empfangsbestätigung (ACK-Bit) zu warten. Die Signalverzögerung kann damit erheblich gesenkt werden und ist zudem hochgradig deterministisch. Auf diese Weise kann die Informationsdichte innerhalb eines CAN-Netzwerks erhöht werden, bzw. können signalverzögernde Elemente verwendet werden, ohne eine Einbuße an Informationsdichte eingehen zu müssen. Das CAN-Netzwerk ist dabei so konzipiert, dass es kollisionsfrei ist, bspw. durch eine getriggerte, zeitgesteuerte Kommunikation der Teilnehmer.

Eine besonders bevorzugte Ausführungsform der Erfindung sieht vor, dass die Logikeinheit dazu eingerichtet ist ein vom zweiten Teilnehmer gesendetes ACK-Bit zu erwarten und zu unterdrücken. Das vom zweiten Teilnehmer gesendetes ACK-Bit wird also vom erfindungsgemäßen Repeater vor dem Sender verborgen, da sie verspätet sein kann und damit die weitere Kommunikation beeinträchtigen könnte.

Vorzugsweise umfasst die Logikeinheit eine Steuerungseinheit, die verschiedene Schaltzustände der Logikeinheit in Abhängigkeit davon steuert, ob dominante und/oder rezessive Bits in den Datenstrom des Datentelegramms eingefügt werden sollen. Die ursprünglichen Bits werden hierdurch überschrieben. Ein DL-Schaltungszustand ermöglicht die Durchleitung aller versandten Bits von einem Teilnehmer an einen anderen. Ein rez(1)-Schaltungszustand blockiert die Übertragung dominanter Bits zwischen den Teilnehmern. Auf diese Weise kann das vom Empfänger versandte reale ACK-Signal vom Repeater abgefangen werden. Ein dom(0)-Schaltungszustand wiederrum ermöglicht die Übertragung dominanter Bits, bspw. für die Signalisierung einer Empfangsbestätigung an den Sender. Mittels der Ansteuerung der beschriebenen Schaltzustände wird auch eine ungewollte Rückübertragung dominanter Bits durch Verriegelung der jeweils anderen Seite mit Sperrzeit realisiert.

Vorzugsweise ist die Logikeinheit durch eine programmierbare Logik, insbesondere durch ein FPGA (Field Programmable Gate Array) oder ein CPLD (Complex Programmable Logic Device), realisiert. Die vom Sender versandten und vom ersten Transceiver des Repeaters empfangenen Daten werden der programmierbaren Logik zugeführt. Die Logik beinhaltet vorzugsweise eine Ablaufsteuerung, eine Sende-/Empfangsrichtungserkennung, eine Nachrichtendurchleitung, ggf. eine Sperrzeit/Verriegelung für abklingende Signale, eine Bestätigungsgenerierung und -unterdrückung. Mit einem derartigen Repeater kann eine Verzögerung von nur 90ns (senderseitiger Transceiver, FPGA und empfängerseitiger Transceiver) erreicht werden, im Vergleich zu den bisher etablierten Lösungen mittels CAN-Bridge/Gateway/Router mit einer Verzögerung von mindestens ~200µs.

Die Verwendung von programmierbarer Logik erlaubt einen flexiblen Einsatz des Repeaters, da die Art der Manipulation individuell programmiert werden kann. Alternativ kann die Steuereinheit des erfindungsgemäßen Repeaters auch durch diskrete Logikbausteine oder speziellere Mikrokontroller realisiert werden. Hierdurch sind aber ggf. gewisse Einschränkungen im Bereich der Funktionalität und/oder der Durchlaufverzögerung zu erwarten. Lösungen mit ASSPs (application specific standard products) oder ASICs (application-specific integrated circuits) sind ebenfalls möglich und würden vermutlich die geringsten Durchlaufverzögerungen ermöglichen. Allerdings wären diese Lösungen weniger flexibel und erst bei höheren Stückzahlen wirtschaftlich rentabel.

Bei dem erfindungsgemäßen Repeater handelt es sich um einen CAN-Repeater mit zwei CAN-Transceivern zur physikalischen Ankopplung des CAN-Repeaters an mindestens ein CAN-Netzwerk, wobei die Logikeinheit dazu eingerichtet ist CAN-Datentelegramme zu erkennen. Der erfindungsgemäße Repeater kann aber auch mit anderen Bussen mit ACK Bit verwendet werden, bspw. mit einem I²C Bus.

Bei einem erfindungsgemäßen CAN-Kommunikationssystem ist zwischen den Teilnehmern zumindest ein erfindungsgemäßer CAN-Repeater geschaltet. Vorzugsweise ist der CAN-Repeater innerhalb des CAN-Netzwerks integriert. Der Repeater ist dann also zwischen zwei Teilnehmern desselben Netzwerks geschaltet. Der CAN-Repeater teilt das CAN-Netzwerk elektrisch in Teilnetzwerke auf und erlaubt eine Datenmanipulation innerhalb des CAN-Netzwerkes, bspw. die Emulation von Empfangsbestätigungen (emulierte ACK-Bits) durch den CAN-Repeater und das Abfangen der vom Empfänger versandten Empfangsbestätigung (reale ACK-Bits). Ein solcher CAN-Repeater lässt sich auch so umsetzen, dass emulierte ACK-Bits in beide Richtungen versendet werden können, wenn die Signallaufzeit vom jeweiligen Sender zum CAN-Repeater unterhalb der maximal erlaubten Signallaufzeit liegt. Im Falle einer Datenübertragungsrate von 1 MBit/s entspricht dies beispielsweise einer maximalen Kabellänge von 40m zu beiden Seiten des CAN-Repeaters und somit einer Verdoppelung der maximal zulässigen Signallaufzeit bzw. Kabellänge. Bei Emulation des ACK-Bits durch den Repeater vor Empfang des rezessiven ACK-Bits kann der Abstand des Repeaters vom Sender größer gewählt werden. Mit zunehmenden Abstand des Repeaters von Sender muss der Zeitpunkt der Emulation des ACK-Bits durch den Repeater früher gewählt werden.

Die Vorteile der Erfindung kommen besonders gut zur Geltung, wenn zwischen dem CAN-Repeater und einem der Teilnehmer ein signalverzögerndes Element, insbesondere ein Drehübertrager oder ein längeres Kabel, vorgesehen ist. Die Dauer der Signalübertragung zwischen dem CAN-Repeater und dem Empfänger spielt bei dem erfindungsgemäßen Kommunikationssystem eine untergeordnete Rolle, da der Sender bereits ein emuliertes ACK-Bit vom CAN-Repeater erhält und mit der weiteren Datenübermittlung nicht auf das reale ACK-Bit des Empfängers warten muss. Das erfindungsgemäße CAN-Kommunikationssystem kann daher auch bei Kommunikationskanälen mit übermäßiger Signallaufzeit, beispielsweise durch Verwendung einer großen Kabellänge (insbes. > 40m), galvanischer Entkopplungselemente, Kodierungswandlung etc. (=signalverzögernde Elemente), hohe Datenraten realisieren.

Vorzugsweise weist die Datenleitung zwischen dem CAN-Repeater und dem anderen Teilnehmer eine Länge auf, die eine maximale Hin- und Rücklaufzeit der Daten von weniger als 90% des Kehrwerts der Übertragungsrate, vorzugsweise etwa 87,5% des Kehrwerts der Übertragungsrate, insbesondere etwa 75% des Kehrwerts der Übertragungsrate, erlaubt. Bei einer Datenleitung von üblicherweise maximal 40 Metern können innerhalb eines CAN-Netzwerkes ACK-Bits vom CAN-Repeater zum Sender schnell genug übertragen werden (CAN-konforme Datenleitung), um die Übertragung des Datentelegramms erfolgreich fortzusetzen und eine Datenübertragungsrate von 1 MBit/s zu ermöglichen. Wenn nur eine niedrigere Datenübertragungsrate verwendet wird, erhöht sich die maximal zulässige Signallaufzeit und damit beispielsweise die maximal mögliche Kabellänge, da mehr Zeit für ein Bit bleibt und somit ein ACK Bit wesentlich mehr Laufzeit beanspruchen darf. Damit die Busteilnehmer Zeit haben die Informationen zu verarbeiten und ggfs. ein ACK Bit zu senden, sollte die Hin- und Rücklaufzeit bei 1 MBit/s maximal etwa 87,5%, insbesondere 75%, der Übertragungszeit ausmachen.

Bei einer besonders bevorzugten Ausführungsform ist auf beiden Seiten des signalverzögernden Elements jeweils mindestens ein CAN-Repeater im CAN-Netzwerk angeordnet. Hierdurch wird gewährleistet, dass Datentelegramme bidirektional versendet werden können.

Im Falle einer sehr langen Datenleitung als signalverzögerndes Element bedeutet "auf beiden Seiten des signalverzögernden Elements", dass die CAN-Repeater üblicherweise maximal 40m vom einem (als Sender agierenden) Teilnehmer entfernt im CAN-Netzwerk angeordnet ist (bei 1 MBit/s Datenübertragungsrate), so dass zu jedem Sender die von einem CAN-Repeater emulierten ACK-Bits schnell genug übertragen werden, um die Übertragung des Datentelegramms erfolgreich fortzusetzen. Wenn die beiden CAN-Repeater für die untereinander weitergeleiteten Signale keine ACK-Bits erwarten, kann das signalverzögernde Element auch eine Verzögerung aufweisen, die größer ist als die eines 40m langen Kabels. Ansonsten wäre es notwendig nach spätestens einer 40m Kabellänge entsprechenden Laufzeit auf dem signalverzögernden Element einen CAN-Repeater einzubauen.

Bei einer alternativen Ausführungsform des erfindungsgemäßen CAN-Kommunikationssystems verbindet der CAN-Repeater zwei CAN-Netzwerke. Somit kann auch zwischen zwei CAN-Netzwerken agiert werden. Der erfindungsgemäße Repeater kann dann bspw. als "Bridge" agieren und Dateninhalte des Datentelegramms manipulieren, indem eine Änderung der CAN-ID vorgenommen wird.

Auch eine Veränderung anderer Dateninhalte ist denkbar, beispielsweise können bei der Übertragung mit Hilfe des erfindungsgemäßen Repeaters Messdaten oder Zahlen mit einem Offset beaufschlagt oder in andere Einheiten umgerechnet werden, soweit dies durch eine festgelegte Änderung auf Bitebene möglich ist.

Die Erfindung betrifft auch ein Verfahren zur Übertragung eines ein rezessives ACK-Bit umfassenden Datentelegramms von einem ersten Teilnehmer an einen zweiten Teilnehmer innerhalb eines CAN-Netzwerks oder zwischen zwei CAN-Netzwerken mit folgenden Verfahrensschritten:
- Senden des Datentelegramms vom ersten Teilnehmer zum zweiten Teilnehmer,
- Überwachung des festgelegten Aufbaus eines vom ersten Teilnehmer an den zweiten Teilnehmer weiterzuleitenden Datentelegramms durch einen erfindungsgemäßen CAN-Repeater;
- Emulation eines ACK-Bits zu einem festgelegten Zeitpunkt i vor oder während des Empfangs des rezessiven ACK-Bits des Datentelegramms durch den CAN-Repeater, und
- Senden des emulierten ACK-Bits an den ersten Teilnehmer.

Bei einer bevorzugten Variante des erfindungsgemäßen Verfahrens wird im Rahmen der Manipulation der Dateninhalte ein ACK-Bits emuliert, sobald der CAN-Repeater ein rezessives ACK-Bit im Datentelegramm des ersten Teilnehmers empfängt. Das emulierte ACK-Bit wird vom CAN-Repeater an den ersten Teilnehmer gesendet, und ein vom zweiten Teilnehmer gesendetes reales ACK-Bit wird vom CAN-Repeater unterdrückt.

Dies kann realisiert werden, indem eine Steuerung des CAN-Repeaters die vom Sender erhaltenen Signale, die entsprechend des Busprotokolls aufgebaut sind, überwacht. Wenn der CAN-Repeater am festgelegten Zeitpunkt des Busprotokolls (ACK-Slot) ein rezessives ACK-Bit auf Senderseite erhält, sendet er ein dominantes ACK-Bit als Empfangsbestätigung zum Sender zurück. Gleichzeitig sendet er das rezessive ACK-Bit auf Empfängerseite und blockiert ein im Anschluss daran vom dortigen Empfänger zurückgesendetes dominantes ACK-Bit, damit dieses nicht verspätet zusätzlich zum vom CAN-Repeater bereits gesendeten dominanten ACK-Bit an den Sender weitergeleitet wird. Da der CAN-Repeater die Signale ansonsten unverändert weiterleitet, kommt es durch den CAN-Repeater lediglich zu einer recht konstanten kleinen Verzögerung (-90 ns). Die Laufzeitbegrenzung auf Grund des erwarteten ACK-Bits vom Empfänger wird dadurch bei unverminderter Informationsdichte aufgehoben und ermöglicht eine größere lokale Ausdehnung des CAN-Netzwerks als dies bislang möglich war.

Damit die Daten immer netzwerkweit konsistent sind, werden vorzugsweise sogenannte "active error frames" (sechs aufeinander folgende dominante Pegel) immer und jederzeit von der einen auf die andere Seite des CAN-Netzwerks übertragen. Diesen "active error" würde ein Teilnehmer aussenden, der einen Übertragungsfehler entdeckt hat. Die Datenübertragung würde dann trotz emulierten ACK-Bits des CAN-Repeaters unterbrochen werden.

Dieses Verfahren kann bspw. vorteilhaft bei der Steuerung von Laserschneidanlagen eingesetzt werden. Als Teilnehmer kommen hier bspw. eine Prozesssteuerung und Laserschneidköpfe zum Einsatz. Mit dem erfindungsgemäßen Verfahren können sowohl die Prozesssteuerung (z.B. ControlLine der Fa. TRUMPF) als auch die Schneidköpfe in Verbindung mit einem Drehübertrager (große Signalverzögerung) ohne Hardware-/Software-Sonderentwicklungen eingesetzt werden.

Vorzugsweise wird im CAN-Repeater eine Überprüfung der Dateninhalte des Datentelegramms durchgeführt, und die Emulation und das Versenden des ACK-Bits durch den CAN-Repeater werden von der Richtigkeit der Daten abhängig gemacht. Die Überprüfung der Daten erfolgt vorzugsweise mittels zyklischer Redundanzprüfung (CRC).

Darüber hinaus kann in der Logikeinheit des CAN-Repeaters konfiguriert werden, bei welcher Art von Datentelegramm ein ACK-Bit direkt vom CAN-Repeater generiert wird, und bei welcher Art von Datentelegramm der Sender auf das reale ACK-Bit vom Empfänger wartet, um die Übertragung fortzuführen.

Neben der Manipulation von ACK-Bits ist auch die Manipulation anderer Dateninhalte eines Telegramms möglich. So sieht eine alternative Variante des erfindungsgemäßen Verfahrens vor, dass die Teilnehmer verschiedenen Netzwerken angehören, dass im Rahmen der Manipulation die CAN-ID des Datentelegramms geändert wird und dass das Datentelegramm mit der geänderten CAN-ID an den zweiten Teilnehmer weitergeleitet wird. Somit kann die CAN-ID des Datentelegramms auf Bitebene im "Vorbeiflug" manipuliert werden. Um eine Überprüfung der Daten zu ermöglichen, sollte entsprechend der Änderung der ID auch die Prüfsumme angepasst werden. Der Repeater agiert dann quasi als Bridge o.ä. zwischen zwei Netzwerken. Vorzugsweise sollte die Möglichkeit einer Zwischenspeicherung von Telegrammen vorgesehen sein, damit es nicht zu Kollisionen auf den Netzwerken kommen kann. Weitere Vorteile der Erfindung ergeben sich aus der Beschreibung und den Zeichnungen. Ebenso können die vorstehend genannten und die weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine stark vereinfachte Darstellung eines CAN-Netzwerks eines erfindungsgemäßen CAN-Kommunikationssystems;
- Fig. 2: eine schematische Darstellung des inneren Aufbaus einer bevorzugten Ausführungsform eines erfindungsgemäßen CAN-Repeaters; und
- Fig. 3: ein Ablaufschema einer ersten Variante des erfindungsgemäßen Verfahrens zur Übertragung eines Datentelegramms innerhalb eines CAN-Kommunikationssystems ;
- Fig. 4: eine stark vereinfachte Darstellung eines CAN-Kommunikationssystems mit zwei CAN-Netzwerken; und
- Fig. 5: ein Ablaufschema eines Verfahrens zur Übertragung eines Datentele-gramms zwischen zwei CAN-Netzwerken.

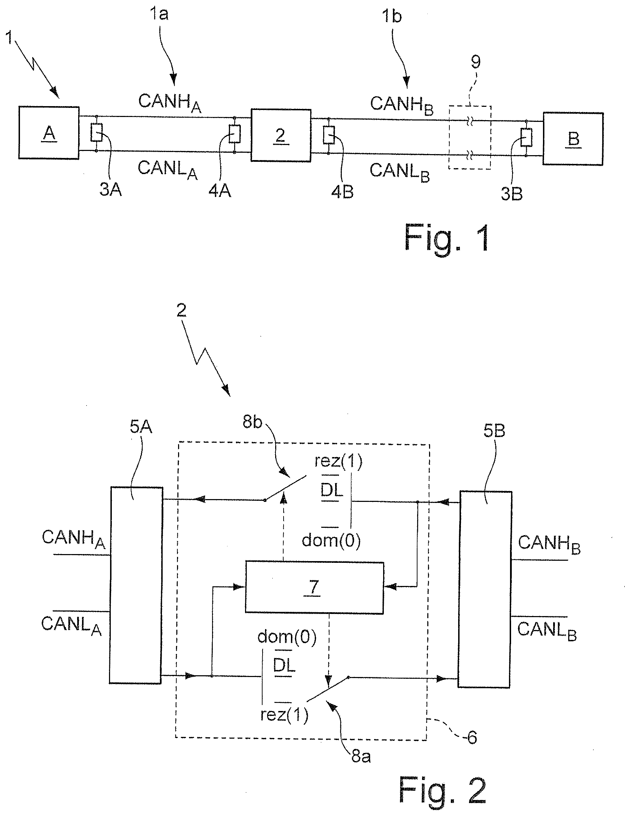

**Fig.** 1 zeigt ein CAN-Netzwerk 1 eines erfindungsgemäßen CAN-Kommunikationssystems mit einem ersten Teilnehmer A, der über Datenleitungen **CANH_{A}, CANH_{B}, CANL_{A}, CANL_{B}** mit einem zweiten Teilnehmer B verbunden ist, wobei die Teilnehmer A, B zum Senden und Empfangen von CAN-Datentelegrammen eingerichtet sind. Im Folgenden wird beispielhaft Teilnehmer A als Sender und Teilnehmer B als Empfänger des Datentelegramms behandelt. Für ein CAN-Kommunikationssystem ist die Signallaufzeit zwischen den am weitesten voneinander entfernten Teilnehmern A, B ein maßgeblicher Parameter zur Bestimmung der maximal möglichen Datenrate. Diese Einschränkung basiert einerseits darauf, dass jeder Teilnehmer A, der als Sender agiert, die eventuellen Buspegeländerungen anderer als Sender agierender Teilnehmer (nicht gezeigt) innerhalb eines Bruchteils einer Bitzeit erkennen muss, damit eine Arbitrierung stattfinden kann, andererseits darauf, dass jeder als Empfänger B agierender Teilnehmer auf die Signale eines Senders A innerhalb eines Bruchteils einer Bitzeit durch Aussendung einer Bestätigung (dominantes Signal im ACK-Slot) reagieren muss. Hierbei summieren sich Verzögerungszeiten in den verschiedenen Komponenten (Controller, Transceiver) der Teilnehmer A, B und in den Datenleitungen CANH_{A}, CANH_{B}, CANL_{A}, CANL_{B} zu einer resultierenden Signallaufzeit. Werden weitere Komponenten in das CAN-Netzwerk 1 eingefügt, wie beispielsweise Repeater, galvanische Trenneinrichtungen, kapazitive Koppler o.ä., so müssen deren Durchlaufzeiten zusätzlich hinzuaddiert werden, wodurch sich die maximal mögliche Datenrate und/oder maximal mögliche Ausdehnung des CAN-Netzwerks weiter verringert.

Wird durch die Konzeption eines CAN-Netzwerkes auf eine Multi-Master-Arbitrierung verzichtet, beispielsweise durch eine getriggerte, zeitgesteuerte Kommunikation der Teilnehmer A, B, wodurch das CAN-Netzwerk 1 inhärent kollisionsfrei ist, ist diese Problematik auf die Reaktion des Empfängers B auf Datentelegramme des Senders A durch Aussendung einer Bestätigung, wie zuvor beschrieben, zu reduzieren. Bei dem erfindungsgemäßen CAN-Kommunikationssystem wird auch dieses Problem gelöst, indem ein CAN-Repeater 2 (beispielsweise nach ISO 11898-2, ggf. mit Sperrzeit zur Unterdrückung ausklingender, dominanter Signalpegel) integriert wird, der um eine neue Funktionalität zur Emulation von Empfängerbestätigungen (emulierte ACK-Bits) und zur Unterdrückung der realen Empfängerbestätigungen (reale ACK-Bits) erweitert ist (s. Fig. 2). Hierdurch werden Datentelegramme von einer Seite des CAN-Repeaters 2, auf der sich der Sender A befindet, zur anderen Seite des CAN-Repeaters 2, auf der sich der Empfänger B befindet (oder ggf. auch mehrere Empfänger befinden), transparent und mit sehr geringer zusätzlicher Signalverzögerung (~ 90ns) durchgeleitet. Das durch die übermäßige Signallaufzeit verzögerte reale ACK-Bit des Empfängers B wird also nicht abgewartet. Stattdessen erzeugt der CAN-Repeater 2 sofort ein emuliertes ACK-Bit (dominantes Bit im ACK-Slot). Hierbei kann konfigurierbar sein, bei welchen Nachrichten eine Bestätigung direkt vom erfindungsgemäßen CAN-Repeater 2 generiert wird. Sobald das verzögerte reale ACK-Signal des Empfängers B beim CAN-Repeater 2 eintrifft, wird dieses nicht zur Seite des CAN-Repeaters 2, auf der sich der Sender A befindet, durchgeleitet, sondern unterdrückt, um Störungen auf der Netzwerkseite des Senders A zu vermeiden. Sollten sich auf der Seite des CAN-Repeaters, auf der sich der Sender A befindet, weitere Empfänger befinden, können deren ggf. auftretende Empfangsbestätigungen transparent vom erfindungsgemäßen CAN-Repeater 2 durchgeleitet werden. Das erfindungsgemäße Verfahren ist auch bei mehr als zwei Teilnehmern A, B einsetzbar. Der CAN-Repeater weist dann entsprechend viele Schnittstellen auf. Ein Repeater mit mehr als zwei Schnittstellen wird i.A. als Hub bezeichnet. Im Rahmen der Erfindung soll ein solcher Hub auch unter den Begriff "Repeater" fallen.

Fig. 1 zeigt eine bevorzugte Positionierung des erfindungsgemäßen CAN-Repeaters 2 innerhalb des CAN-Netzwerks 1. Die Teilnehmer A, B sind über Busabschlusswiderstände 3A, 3B in das Netzwerk 1 eingebunden. Der erfindungsgemäße CAN-Repeater 2 befindet sich zwischen den beiden Teilnehmern A, B und teilt das CAN-Netzwerk 1 elektrisch (nicht logisch) in CAN-Teilnetzwerke 1A, 1B auf. Der CAN-Repeater 2 verhält sich beiderseits elektrisch wie ein weiterer CAN-Teilnehmer. Das bedeutet, dass beide Seiten des CAN-Repeaters 2 jeweils an eines der CAN-Teilnetzwerke 1A, 1B mit CAN-konformen Busabschlusswiderständen **4A, 4B** angeschlossen werden. Standardmäßig sind in jedem CAN-Netzwerk zwei Busabschlusswiderstände an den Enden des CAN-Netzwerks 1 vorgeschrieben, wobei mit "Enden des Netzwerks" die Teilnehmer gemeint sind, die sich am Rand des Netzwerks 1 (am Ende einer Datenleitung) befinden. Somit kann sich ein Abschlusswiderstand jeweils direkt am CAN-Repeater befinden, oder auch ggf. an einem anderen Teilnehmer im Teilnetzwerk, je nachdem welcher Teilnehmer das Netzwerk physikalisch begrenzt. Häufig wird das der CAN-Repeater sein. Ist in jedem Teilnetzwerk 1A, 1B jeweils nur ein weiterer Teilnehmer A, B vorhanden, wie in Fig. 1, so werden die Busabschlusswiderstände 4A, 4B vorzugsweise, wie dargestellt, direkt am CAN-Repeater 2 angebracht.

Der CAN-Repeater 2 ist so angeordnet, dass die Datenleitungen (CANH_{A}, CANL_{A}) zwischen dem ersten Teilnehmer A und dem CAN-Repeater 2 CAN-konform sind, d.h. in der Länge so begrenzt sind, dass die Signallaufzeit für die Datenübertragung ausreicht, um den erfolgreichen Erhalt eines Datentelegramms zu quittieren (i.a. < 40m bei maximaler Datenrate von 1 MBit). Die Signallaufzeit muss im Fall von 1 MBit/s somit unterhalb von 1µs liegen. Da der erfindungsgemäße CAN-Repeater das vom Sender A gesendete Datentelegramm überwacht, ein emuliertes ACK-Bit erzeugt und an den Sender A zurücksendet, bevor das reale ACK-Bit vom Empfänger versandt wird, kann die Signallaufzeit zwischen dem CAN-Repeater 2 und dem zweiten Teilnehmer B wesentlich größer gewählt werden (nicht CAN-konform), indem z.B. für CAN-Netzwerke übermäßig lange Leitungen als Datenleitung CANH_{B}, CANL_{B} verwendet werden oder andere signalverzögernde Elemente 9 (z.B. kapazitive Drehübertrager) im Teilnetzwerk 1B integriert werden, bei denen mit Mitteln nach dem Stand der Technik keine verlässliche CAN-Kommunikation mit der geforderten Datenrate möglich wäre. In einem Versuchsaufbau wurde unter Verwendung eines erfindungsgemäßen Repeaters ein funktionierendes CAN-Netzwerk mit Datenleitungen von 1km Länge bei 1 MBit/s realisiert. Entscheidend ist, dass das Versenden des emulierten ACK-Bits über eine CAN-konforme Strecke CANH_{A}, CANL_{A} erfolgt. Die Signalverzögerung ist dann so klein, dass die Übertragung des Datentelegramms fortgesetzt werden kann.

Fig. 2 zeigt einen bevorzugten Aufbau eines erfindungsgemäßen CAN-Repeaters 2. Als Schnittstelle zum CAN-Netzwerk dienen CAN-Transceiver 5A, 5B. Die CAN-Transceiver 5A, 5B empfangen eine üblicherweise NRZ-(Non-Return-to-Zero) kodierte Signalfolge (Datentelegramm) und führen diese einer Logikeinheit 6 zu, die im vorliegenden Beispiel eine Steuereinheit 7 und eine Schalteinheit mit zwei Schaltelementen 8a, 8b umfasst. Die Schaltelemente 8a, 8b können jeweils in drei verschiedene Schaltzustände dom(0), DL, rez(1) gebracht werden. Dies kann bspw. mittels Transistoren realisiert sein. Im Schaltzustand "DL" werden alle ankommenden Daten (rezessive und dominante Bits) des versandten Datentelegramms vom ersten Transceiver 5A zum zweiten Transceiver 5B (oder umgekehrt, je nachdem von welchem Teilnehmer A, B das Datentelegramm versendet wurde) durchgeleitet. Im Schaltzustand "rez(1)" werden dominante Bits geblockt, im Schaltzustand "dom(0)" werden dominante Bits übertragen.

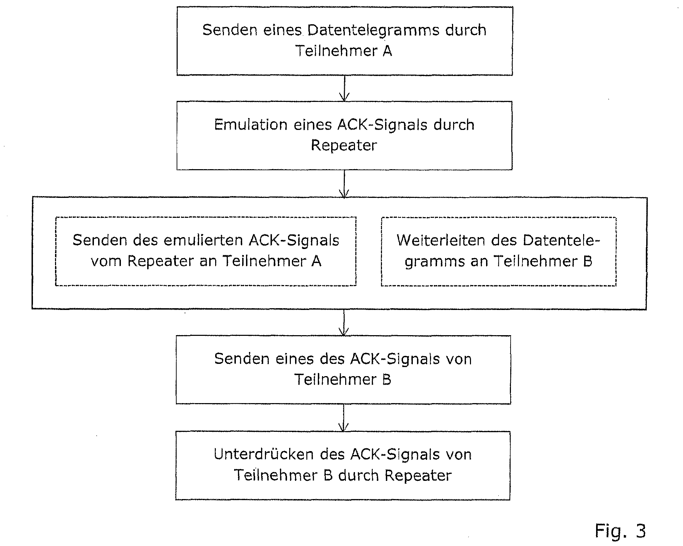

Die vom Sender A versandten und vom Transceiver 5A empfangenen Dateninhalte werden von der Steuereinheit 7 überwacht. Das erste Schaltelement 8a befindet sich zunächst im Schaltzustand "DL", so dass die Daten unverändert an den zweiten Transceiver 5B und weiter an den Empfänger B übertragen werden. Das zweite Schaltelement 8b wird in den Schaltzustand "rez(1)" geschaltet, um eine Rückübertragung dominanter Bits zum ersten Transceiver 5A zu unterbinden (Unterdrückung dominanter Signalpegel). Sobald der CAN-Repeater 2 ein rezessives ACK-Bit von der Senderseite erhält, erzeugt er ein dominantes ACK-Bit (zweites Schaltelement wird kurzzeitig in den Schaltzustand dom(0) gebracht) und sendet dieses als Empfangsbestätigung über den ersten Transceiver 5A zum Sender A zurück. Nach Versenden des vom CAN-Repeater 2 emulierten dominanten ACK-Bits erfolgt eine erneute Umschaltung des zweiten Schaltelements 8b auf "rez(1)", um die Weiterleitung des später vom Empfänger B ausgesandten realen ACK-Bits zu unterbinden. Die entsprechenden Verfahrensschritte sind in Fig. 3 skizziert.

Das erfindungsgemäße Verfahren ermöglicht durch Emulation eines ACK-Bits durch den Repeater eine verbesserte Datenübertragungsrate innerhalb eines CAN-Netzwerks und eine flexiblere Ausgestaltung eines CAN-Systems.

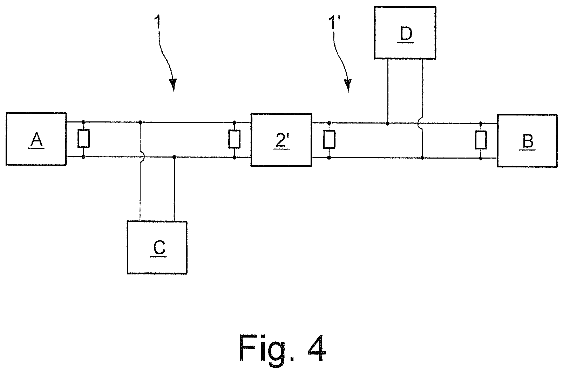

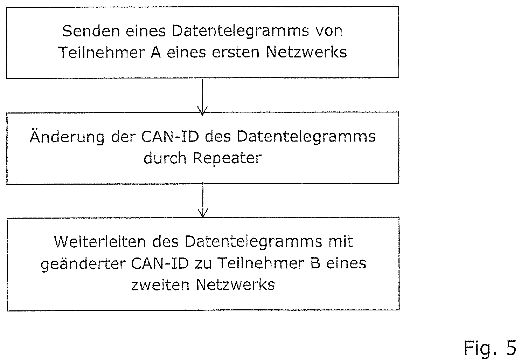

Fig. 4 zeigt ein Kommunikationssystem mit zwei Netzwerken 1, 1', die über einen erfindungsgemäßen CAN-Repeater 2' gekoppelt sind. Das erste Netzwerk 1 umfasst zwei Teilnehmer A, C, wobei Teilnehmer A als Master und Teilnehmer C als Slave arbeitet. Das über den Repeater 2' angeschlossene zweite Netzwerk 1' umfasst ebenfalls zwei Teilnehmer B, D, wobei Teilnehmer B als Slave arbeitet und ein Datentelegramm von Teilnehmer A aus dem ersten Netzwerk 1 erhalten soll. Auf diese Weise können beide Slaves B, D die gleiche ID tragen, was innerhalb eines einzigen Netzwerks zu Problemen in der Kommunikation führen würde. Der Master A kann den Slave B des zweiten Netzwerks 1' unter Verwendung einer anderen Adresse erreichen, wenn der Repeater 2' die Bits, welche die Slave Adresse beschreiben, überschreibt und mit der geänderten Adresse an den Slave B des zweiten Netzwerks 1' weiterleitet. Die entsprechenden Verfahrensschritte sind in Fig. 5 skizziert.

## Patentansprüche

1. CAN-Repeater (2, 2') für ein Kommunikationssystem mit mindestens einem Netzwerk (1, 1') zur Weiterleitung von CAN-Datentelegrammen zwischen einem ersten Teilnehmer (A) und einem zweiten Teilnehmer (B), entweder innerhalb des Netzwerks (1) oder zur Verbindung zweier gleichartiger Netzwerke (1, 1'),
wobei der CAN-Repeater (2) zwei CAN-Transceivern (5A, 5B) zur physikalischen Ankopplung des CAN-Repeaters (2) an mindestens ein CAN-Netzwerk (1, 1') umfasst, wobei die Logikeinheit (6) dazu eingerichtet ist CAN-Datentelegramme zu erkennen,
wobei der Repeater (2, 2') dazu eingerichtet ist, CAN-Datentelegramme auf Bit-übertragungsebene des ISO-OSI-Referenzmodells weiterzuleiten, mit mindestens zwei Transceivern (5A, 5B) zur physikalischen Ankopplung des CAN-Repeaters (2, 2') an das mindestens eine Netzwerk (1, 1'),
wobei der Repeater (2, 2') eine Logikeinheit (6) umfasst, die dazu eingerichtet ist, den festgelegten Aufbau eines vom ersten Teilnehmer (A) an den zweiten Teilnehmer (B) weiterzuleitenden CAN-Datentelegramms zu erkennen, ab mindestens einem festgelegten Zeitpunkt innerhalb des CAN-Datentelegramms Dateninhalte zu manipulieren und die manipulierten Dateninhalte an den ersten Teilnehmer (A) und/oder den zweiten Teilnehmer (B) zu senden.

2. CAN-Repeater nach Anspruch 1, **dadurch gekennzeichnet, dass** die Logikeinheit (6) zur Emulation von ACK-Signalen und zum Unterdrücken von ACK-Signalen, die von einem der Teilnehmer (A, B) gesendet wurden, eingerichtet ist.

3. CAN-Repeater nach einem der vorhergehenden Ansprüche, **dadurch gekennzeichnet, dass** die Logikeinheit (6) eine Steuerungseinheit (7) aufweist, die verschiedene Schaltzustände (dom (0), DL, rez(1)) der Logikeinheit (6) in Abhängigkeit davon steuert, ob dominante und/oder rezessive Bits in den Datenstrom des Datentelegramms eingefügt werden sollen.

4. CAN-Repeater nach einem der vorhergehenden Ansprüche, **dadurch gekennzeichnet, dass** die Logikeinheit (6) durch eine programmierbare Logik, insbesondere durch ein FPGA, ASIC, ASSP oder ein CPLD, realisiert ist.

5. CAN-Kommunikationssystem mit mindestens einem CAN-Netzwerk, wobei das CAN-Kommunikationssystem einen ersten Teilnehmer (A) über Datenleitungen (CANH_{A}, CANH_{B}, CANL_{A}, CANL_{B}**)** mit einem zweiten Teilnehmer (B) verbindet, wobei die Teilnehmer (A, B) zum Senden und Empfangen von CAN-Datentelegrammen eingerichtet sind, **dadurch gekennzeichnet, dass** zwischen den Teilnehmern (A, B) zumindest ein CAN-Repeater (2, 2') gemäß einem der vorhergehenden Ansprüche geschaltet ist.

6. CAN-Kommunikationssystem nach Anspruch 5, **dadurch gekennzeichnet, dass** der CAN-Repeater (2) innerhalb des CAN-Netzwerks (1) integriert ist.

7. CAN-Kommunikationssystem nach Anspruch 6, **dadurch gekennzeichnet, dass** zwischen dem CAN-Repeater (2) und dem zweiten Teilnehmer (B) ein signalverzögerndes Element (9), insbesondere ein Drehübertrager, vorgesehen ist.

8. CAN-Kommunikationssystem nach Anspruch 7, **dadurch gekennzeichnet, dass** die Datenleitung (CANH_{A}, CANL_{A}) zwischen dem CAN-Repeater (2) und dem ersten Teilnehmer (A) eine Länge aufweist, die eine maximale Hin- und Rücklaufzeit der Daten von weniger als 90% des Kehrwerts der Übertragungsrate, vorzugsweise etwa 87,5% des Kehrwerts der Übertragungsrate, insbesondere etwa 75% des Kehrwerts der Übertragungsrate, erlaubt.

9. CAN-Kommunikationssystem nach Anspruch 7 oder 8, **dadurch gekennzeichnet**, wobei auf beiden Seiten des signalverzögernden Elements (9) jeweils mindestens ein CAN-Repeater (2) gemäß Anspruch 5 im Netzwerk angeordnet ist.

10. CAN-Kommunikationssystem nach Anspruch 5, **dadurch gekennzeichnet, dass** der CAN-Repeater (2') zwei CAN-Netzwerke (1, 1') verbindet.

11. Verfahren zur Übertragung eines CAN-Datentelegramms von einem ersten Teilnehmer (A) an einen zweiten Teilnehmer (B) innerhalb eines CAN-Netzwerks (1) oder zwischen zwei CAN-Netzwerken (1, 1') eines CAN-Kommunikationssystems nach einem der Ansprüche 6 bis 10, mit folgenden Verfahrensschritten:
- Senden des CAN-Datentelegramms vom ersten Teilnehmer (A) zum zweiten Teilnehmer (B),
- Überwachung des festgelegten Aufbaus eines vom ersten Teilnehmer (A) an den zweiten Teilnehmer (B) weiterzuleitenden CAN-Datentelegramms durch einen CAN-Repeater (2, 2') gemäß einem der Ansprüche 1 bis 4;
- Manipulation von ausgewählten Dateninhalten des Datentelegramms ab mindestens einem festgelegten Zeitpunkt innerhalb des Datentelegramms durch den CAN-Repeater (2, 2'), und
- Senden der manipulierten Dateninhalte an den ersten Teilnehmer (A) und/oder an den zweiten Teilnehmer (B).

12. Verfahren nach Anspruch 11, **dadurch gekennzeichnet, dass** im Rahmen der Manipulation der Dateninhalte ein ACK-Signal emuliert wird, sobald der CAN-Repeater (2) ein rezessives ACK-Signal im Datentelegramm des Teilnehmers A empfängt, dass das emulierte ACK-Signal vom CAN-Repeater (2) an den ersten Teilnehmer (A) gesendet wird und dass ein vom zweiten Teilnehmer (B) gesendetes reales ACK-Signal unterdrückt wird.

13. Verfahren nach Anspruch 12, **dadurch gekennzeichnet, dass** eine Überprüfung der Dateninhalte des Datentelegramms durchgeführt wird und die Emulation und das Versenden des ACK-Signals durch den CAN-Repeater (2) abhängig gemacht wird von der Richtigkeit der Daten.

14. Verfahren nach Anspruch 11, **dadurch gekennzeichnet, dass** die Teilnehmer (A, B) verschiedenen Netzwerken (1, 1') angehören, dass im Rahmen der Manipulation die CAN-ID des Datentelegramms geändert wird und dass das Datentelegramm mit der geänderten ID an den zweiten Teilnehmer (B) weitergeleitet wird.

## Claims

1. CAN repeater (2, 2') for a communication system having at least one network (1, 1') for forwarding CAN data telegrams between a first subscriber (A) and a second subscriber (B), either within the network (1) or for connecting two similar networks (1, 1'),
wherein the CAN repeater (2) comprises two CAN transceivers (5A, 5B) for physically coupling the CAN repeater (2) to at least one CAN network (1, 1'), wherein the logic unit (6) is configured to recognize CAN data telegrams,
wherein the repeater (2, 2') is configured to forward CAN data telegrams at the physical layer of the ISO-OSI reference model, and having at least two transceivers (5A, 5B) for physically coupling the CAN repeater (2, 2') to the at least one network (1,1'),
wherein the repeater (2, 2') comprises a logic unit (6) which is configured to recognize the defined structure of a CAN data telegram to be forwarded from the first subscriber (A) to the second subscriber (B),
to manipulate data content within the CAN data telegram from at least one defined point in time and
to transmit the manipulated data content to the first subscriber (A) and/or the second subscriber (B).

2. CAN repeater according to claim 1, **characterized in that** the logic unit (6) is configured to emulate ACK signals and to suppress ACK signals which were transmitted from one of the subscribers (A, B).

3. CAN repeater according to either of the preceding claims, **characterized in that** the logic unit (6) has a control unit (7) which controls different switching states (dom (0), DL, rez(1)) of the logic unit (6) on the basis of whether dominant and/or recessive bits are to be inserted into the data stream of the data telegram.

4. CAN repeater according to any of the preceding claims, **characterized in that** the logic unit (6) is provided by a programmable logic device, in particular by an FPGA, ASIC, ASSP or a CPLD.

5. CAN communication system having at least one CAN network, the CAN communication system connecting a first subscriber (A) to a second subscriber (B) via data lines (CANH_{A}, CANH_{B}, CANL_{A}, CANL_{B}), the subscribers (A, B) being configured to transmit and receive CAN data telegrams, **characterized in that** at least one CAN repeater (2, 2') according to one of the preceding claims is connected between the subscribers (A, B).

6. CAN communication system according to claim 5, **characterized in that** the CAN repeater (2) is integrated within the CAN network (1).

7. CAN communication system according to claim 6, **characterized in that** a signal-delaying element (9), in particular a rotary transmitter, is provided between the CAN repeater (2) and the second subscriber (B).

8. CAN communication system according to claim 7, **characterized in that** the data line (CANH_{A}, CANL_{A}) between the CAN repeater (2) and the first subscriber (A) has a length which allows a maximum round trip time of the data of less than 90% of the reciprocal of the transmission rate, preferably approximately 87.5% of the reciprocal of the transmission rate, in particular approximately 75% of the reciprocal of the transmission rate.

9. CAN communication system according to either claim 7 or claim 8, **characterized in that** at least one CAN repeater (2) according to claim 5 is arranged in the network in each case on both sides of the signal-delaying element (9).

10. CAN communication system according to claim 5, **characterized in that** the CAN repeater (2') connects two CAN networks (1, 1').

11. Method for transmitting a CAN data telegram from a first subscriber (A) to a second subscriber (B) within a CAN network (1) or between two CAN networks (1, 1') of a CAN communication system according to any of claims 6 to 10, comprising the following method steps:
- transmitting the CAN data telegram from the first subscriber (A) to the second subscriber (B);
- monitoring the defined structure of a CAN data telegram to be forwarded from the first subscriber (A) to the second subscriber (B) by a CAN repeater (2, 2') according to any of claims 1 to 4;
- manipulating selected data content of the data telegram from at least one defined point in time within the data telegram by the CAN repeater (2, 2'); and
- transmitting the manipulated data content to the first subscriber (A) and/or to the second subscriber (B).

12. Method according to claim 11, **characterized in that** an ACK signal is emulated as part of the manipulation of the data content as soon as the CAN repeater (2) receives a recessive ACK signal in the data telegram of subscriber A, **in that** the emulated ACK Signal is transmitted to the first subscriber (A) by the CAN repeater (2) and **in that** a real ACK signal transmitted from the second subscriber (B) is suppressed.

13. Method according to claim 12, **characterized in that** the data content of the data telegram is checked and the emulation and the transmission of the ACK signal by the CAN repeater (2) is made to be dependent on the correctness of the data.

14. Method according to claim 11, **characterized in that** the subscribers (A, B) belong to different networks (1, 1'), **in that** the CAN ID of the data telegram is changed as part of the manipulation and **in that** the data telegram having the changed ID is forwarded to the second subscriber (B).

## Revendications

1. Répéteur CAN (2, 2') pour un système de communication comportant au moins un réseau (1, 1') pour la transmission de télégrammes de données CAN entre un premier abonné (A) et un deuxième abonné (B), soit au sein du réseau (1), soit pour la liaison de deux réseaux de même type (1, 1'),
le répéteur CAN (2) comprenant deux émetteurs-récepteurs CAN (5A, 5B) pour le couplage physique du répéteur CAN (2) à au moins un réseau CAN (1, 1'), l'unité logique (6) étant conçue pour détecter des télégrammes de données CAN,
le répéteur (2, 2') étant conçu pour transmettre des télégrammes de données CAN au niveau de transmission des bits du modèle de référence OSI de l'ISO,
avec au moins deux émetteurs-récepteurs (5A, 5B) pour le couplage physique du répéteur CAN (2, 2') audit au moins un réseau (1, 1'),
le répéteur (2, 2') comprenant une unité logique (6) qui est conçue pour reconnaître la structure définie d'un télégramme de données CAN à transmettre du premier abonné (A) au deuxième abonné (B), pour manipuler des contenus de données à l'intérieur du télégramme de données CAN à partir d'au moins un instant défini et pour envoyer les contenus de données manipulés au premier abonné (A) et/ou au deuxième abonné (B).

2. Répéteur CAN selon la revendication 1, **caractérisé en ce que** l'unité logique (6) est configurée pour émuler des signaux ACK et pour supprimer des signaux ACK qui ont été envoyés par l'un des abonnés (A, B).

3. Répéteur CAN selon l'une des revendications précédentes, **caractérisé en ce que** l'unité logique (6) présente une unité de commande (7) qui commande différents états de commutation (dom(0), DL, rez(1)) de l'unité logique (6) selon que des bits dominants et/ou récessifs doivent être insérés dans le flux de données du télégramme de données.

4. Répéteur CAN selon l'une des revendications précédentes, **caractérisé en ce que** l'unité logique (6) est réalisée par une logique programmable, en particulier par un FPGA, un ASIC, un ASSP ou un CPLD.

5. Système de communication CAN comportant au moins un réseau CAN, le système de communication CAN reliant un premier abonné (A) à un deuxième abonné (B) par l'intermédiaire de lignes de données (CANH_{A}, CANH_{B}, CANL_{A}, CANL_{B}), les abonnés (A, B) étant conçus pour envoyer et recevoir des télégrammes de données CAN, **caractérisé en ce qu'**au moins un répéteur CAN (2, 2') selon l'une des revendications précédentes est monté entre les abonnés (A, B).

6. Système de communication CAN selon la revendication 5, **caractérisé en ce que** le répéteur CAN (2) est intégré dans le réseau CAN (1).

7. Système de communication CAN selon la revendication 6, **caractérisé en ce qu'**un élément retardateur de signal (9), en particulier un transformateur rotatif, est prévu entre le répéteur CAN (2) et le deuxième abonné (B).

8. Système de communication CAN selon la revendication 7, **caractérisé en ce que** la ligne de données (CANH_{A}, CANL_{A}) entre le répéteur CAN (2) et le premier abonné (A) présente une longueur qui permet un temps d'aller-retour maximal des données inférieur à 90 % de l'inverse du débit de transmission, de préférence d'environ 87,5 % de l'inverse du débit de transmission, en particulier d'environ 75 % de l'inverse du débit de transmission.

9. Système de communication CAN selon la revendication 7 ou 8, **caractérisé en ce qu'**au moins un répéteur CAN (2) selon la revendication 5 est disposé dans le réseau des deux côtés de l'élément retardateur de signal (9).

10. Système de communication CAN selon la revendication 5, **caractérisé en ce que** le répéteur CAN (2') relie deux réseaux CAN (1, 1').

11. Procédé de transmission d'un télégramme de données CAN d'un premier abonné (A) à un deuxième abonné (B) au sein d'un réseau CAN (1) ou entre deux réseaux CAN (1, 1') d'un système de communication CAN selon l'une des revendications 6 à 10, comprenant les étapes de procédé suivantes :
- envoi du télégramme de données CAN du premier abonné (A) au deuxième abonné (B),
- surveillance de la structure définie d'un télégramme de données CAN à transmettre du premier abonné (A) au deuxième abonné (B) par un répéteur CAN (2, 2') selon l'une des revendications 1 à 4 ;
- manipulation de contenus de données sélectionnés du télégramme de données à partir d'au moins un instant défini à l'intérieur du télégramme de données par le répéteur CAN (2, 2'), et
- envoi des contenus de données manipulés au premier abonné (A) et/ou au deuxième abonné (B).

12. Procédé selon la revendication 11, **caractérisé en ce que**, dans le cadre de la manipulation des contenus de données, un signal ACK est émulé dès que le répéteur CAN (2) reçoit un signal ACK récessif dans le télégramme de données de l'abonné A, que le signal ACK émulé est envoyé par le répéteur CAN (2) au premier abonné (A) et qu'un signal ACK réel envoyé par le deuxième abonné (B) est supprimé.

13. Procédé selon la revendication 12, **caractérisé en ce qu'**une vérification des contenus de données du télégramme de données est effectuée et l'émulation et l'envoi du signal ACK par le répéteur CAN (2) sont rendues dépendants de l'exactitude des données.

14. Procédé selon la revendication 11, **caractérisé en ce que** les abonnés (A, B) appartiennent à des réseaux différents (1, 1'), que l'identificateur CAN du télégramme de données est modifié dans le cadre de la manipulation et que le télégramme de données avec l'identificateur modifié est transmis au deuxième abonné (B).
